(19) Europäisches Patentamt
European Patent Office
Office européen des brevets

(11) Veröffentlichungsnummer : **0 168 573**
**B1**

(12) **EUROPÄISCHE PATENTSCHRIFT**

(45) Veröffentlichungstag der Patentschrift :
30.08.89

(51) Int. Cl.⁴ : **F 27 D   3/00**, B 65 G  47/29,
F 26 B  15/14

(21) Anmeldenummer : 85105563.2

(22) Anmeldetag : 07.05.85

(54) Vorrichtung zum Justieren von auf einer Tragfläche angeordneten Brennkassetten.

(30) Priorität : 26.06.84 DE 3423434

(43) Veröffentlichungstag der Anmeldung :
22.01.86 Patentblatt 86/04

(45) Bekanntmachung des Hinweises auf die Patenterteilung : 30.08.89 Patentblatt 89/35

(84) Benannte Vertragsstaaten :
CH FR IT LI

(56) Entgegenhaltungen :
DE–A– 3 107 682
GB–A– 2 076 512

(73) Patentinhaber : Hans Lingl Anlagenbau und Verfahrenstechnik GmbH & Co. KG
Albrecht-Berblinger-Strasse 6
D-7910 Neu-Ulm (DE)

(72) Erfinder : Müller, Walter
Benjamin Miller Strasse 4
D-8908 Krumbach (DE)

(74) Vertreter : Körber, Wolfhart, Dr. et al
Patentanwälte Dipl.-Ing. H. Mitscherlich Dipl.-Ing. K.
Gunschmann Dr.rer.nat. W. Körber Dipl.Ing. J.
Schmidt-Evers Dipl.-Ing. W. Melzer Steinsdorfstrasse
10
D-8000 München 22 (DE)

## Beschreibung

Die Erfindung bezieht sich auf Vorrichtungen nach den Oberbegriffen der Ansprüche 1 und 2.

Eine Vorrichtung dieser Art ist aus der DE-OS 31 07 682 bekannt. In dieser wird eine Einteilvorrichtung für eng an eng auf einem Stauförderer herangeführte Kästen beschrieben, bei der der jeweils vorderste Kasten der gegen eine Anschlagrolle gestauten Kästen von der Anschlagrolle freigebbar und durch einen Zwischenförderer einem Einteilförderer übergebbar ist. Im Bereich des Zwischenförderers laufen auf einer Kreisbahn, die mit einem Abschnitt in den Zwischenförderer hineinreicht in gleichmäßigen Abständen voneinander kleiner als die Länge der Kästen mehrere Anschlagrollen um, derart, daß die in ständigem Fluß gestaut herangeführten Kästen gegen eine der umlaufenden Anschlagrollen zur Anlage kommen und die nächst dieser in die Förderebene des Zwischenförderers auftauchende Anschlagrolle den jeweils vordersten Kasten an seinem hinteren Ende anhebt und gleichzeitig die übrigen Kästen aufhält. Die von einer Anschlagrolle aufgehaltene Kastenreihe wird mit der durch die Anschlagrolle vorgegebenen Geschwindigkeit weiterbewegt. Mit dem Auftauchen der nachfolgenden, jeweils den vordersten Kasten anhebenden Anschlagrolle taucht gleichzeitig die vorausgehende Anschlagrolle wieder unter die Förderebene und der hinten angehobene Kasten läuft nach vorne ab, von wo er einzeln weitertransportiert werden kann. Mit der bekannten Vorrichtung können die eng aneinander anliegend herangeführten Kästen hintereinander vereinzelt werden.

Der Erfindung liegt die Aufgabe zugrunde, eine Vorrichtung der eingangs aufgeführten Art so zu gestalten, daß sämtliche Kassetten einer Kassetenreihe gleichzeitig und zugleich genau ausgerichtet werden.

Diese Aufgabe wird durch die in den Ansprüchen 1 und 2 gekennzeichneten Ausbildungen gelöst.

Die erfindungsgemäßen Vorrichtungen haben den Vorteil, daß das gleichzeitige Justieren aller Kassetten einer Kassettenreihe weniger Zeit beansprucht als das einzelweise Ausrichten der Kassetten, daß ferner infolge der Relativbewegung zwischen den Anschlagrollen und den Kassetten die Ausrichtung jeder einzelnen Kassette sehr genau wird und daß die Mittel zum gleichzeitigen Justieren denkbar einfach sind. Die Ausbildung nach Anspruch 1 hat den weiteren Vorteil, daß die Justierelemente nur in einer Richtung bewegt werden müssen.

Die Ausgestaltung nach Anspruch 3 trägt dem Umstand Rechnung, daß Brennkassetten infolge ihres recht empfindlichen keramischen Materials in der Regel in Gruppen mit Lücken zwischen den Kassetten gefördert werden.

Die Ausgestaltung nach Anspruch 4 ermöglicht, ein und denselben Antrieb für alle Justierelemente zu benutzen.

Nachfolgend werden Ausführungsbeispiele der Erfindung anhand einer vereinfachten Zeichnung beschrieben. Es zeigen :

Figur 1 eine erfindungsgemäß ausgestaltete Vorrichtung zum Justieren in der Seitenansicht ;

Fig. 2 und 3 die Vorrichtung zum Justieren nach Fig. 1 in verschiedenen Arbeitspositionen ;

Fig. 4 einen lotrechten Schnitt durch die Vorrichtung nach Fig. 1.

Auf einer allgemein mit 1 bezeichneten Tragfläche sind mehrere Brennkassetten 2 nebeneinanderliegend angeordnet, die einen U-förmigen Querschnitt haben und zur Aufnahme von Ziegelformlingen, zum Beispiel Dachziegeln, dienen.

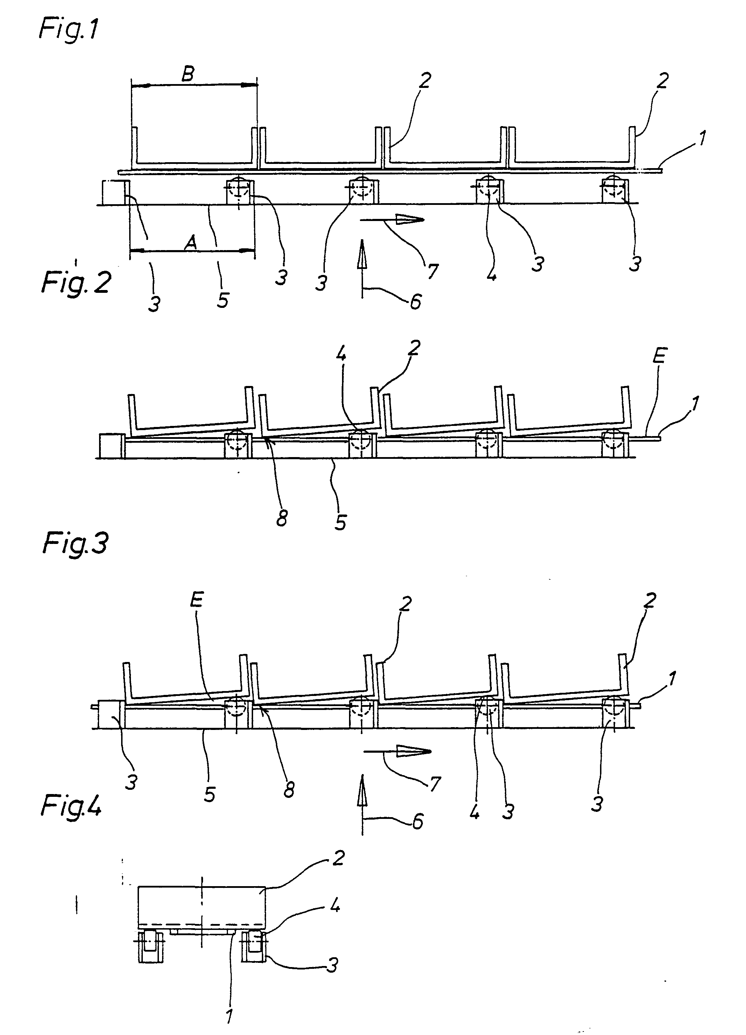

Unterhalb der Tragfläche 1 befinden sich Justierelemente 3, wobei jeder Brennkassette 2 ein Justierelement 3 zugeordnet ist. Die Justierelemente 3, die eine noch zu erklärende Hebefunktion ausführen, tragen an ihren oberen Enden Rollen 4, die um horizontale Achsen frei drehbar sind. Alle Justierelemente 3 sind durch eine Verbindungsstange 5 miteinander verbunden. Die Justierelemente 3 sind sowohl vertikal (Pfeil 6) als auch horizontal (Pfeil 7) durch einen nicht dargestellten Antrieb verschiebbar. In vertikaler Richtung sind die Justierelemente 3 über die Förderebene E hinaus verschiebbar, wie es in den Fig. 2 und 3 dargestellt ist.

Die Justierelemente 3 befinden sich außermittig zu den Brennkassetten 2. Sie sind jeweils zu ein und derselben Seite hin versetzt unterhalb der Brennkassetten 2 angeordnet. In ihrer hochgefahrenen Position heben die Justierelemente 3 die Brennkassetten 2 somit einseitig an. Hierdurch werden jeweils an der benachbarten Brennkassette 2 Anschlagstellen 8 geschaffen, gegen die die Justierelemente 3 bei der nachfolgenden Verschiebung in Richtung des Pfeiles 7 stoßen und die eine Justierung der Brennkassetten 2 durch eine entsprechend weite horizontale Verschiebung der Justierelemente 3 ermöglichen.

In der Darstellung gemäß Fig. 3 sind die Justierelemente 3 verschoben worden und liegen an den Anschlagstellen 8 der benachbarten Brennkassetten 2 an.

Die erfindungsgemäße Ausgestaltung eignet sich für verschiedene Justierungszwecke. Es ist möglich, die Brennkassetten 2 auszurichten und auch auf einen gleichen Abstand zueinander zu bringen.

In dem vorbeschriebenen Ausführungsbeispiel erfolgt die Justierung der Brennkassetten 2 durch die Verschiebung der angehobenen Justierelemente 3 in Richtung des Pfeiles 7, wobei die Justierelemente 3 in Anschlagkontakt mit den jeweils benachbarten Brennkassetten gelangen. Dies kann bei einer stillstehenden Tragfläche 1 geschehen.

Im Rahmen der Erfindung ist es bei einer Förderrichtung, die dem Pfeil 7 entgegensetzt ist, auch möglich, die Justierelemente 3 lediglich vertikal verstellbar auszubilden. Bei einer solchen Ausgestaltung wird die Justierung dadurch hervorgerufen, daß die Tragfläche 1, die hier als Förderer ausgebildet ist, die Brennkassetten 2 entgegen dem Pfeil 7 gegen die Justierelemente 3 fördert, an denen sie justiert werden.

Es ist im Rahmen der Erfindung auch möglich, die Brennkasseten auf einer Palette oder auf einem Transportwagen zu justieren. Die Justierung kann dabei entweder durch eine Verschiebung der Palette, wobei es keiner horizontalen Verschiebbarkeit der Justierelemente 3 bedarf, oder durch eine horizontale Verschiebung der Justierelemente 3 erfolgen, bei der die Brennkassetten nach Anschlagkontakt mit den Justierelementen auf der Palette verschoben und justiert werden.

**Patentansprüche**

1. Vorrichtung zum Justieren von Brennkassetten auf einem Horizontalförderer mittels in Anschlagkontakt mit den Kassetten versetzbaren, an ihren oberen Enden Rollen aufweisenden Justierelementen, welche auf die Teilung zwischen den Kasseten abgestimmte Abstände voneinander aufweisen und aus einer Lage unterhalb des Horizontalförderers über diesen anhebbar sind, wobei die Justierelemente die Brennkassetten an deren in Förderrichtung hinteren, unteren Seitenrändern angreifend über die Förderebene anheben, dadurch gekennzeichnet, daß die Justierelemente (3) entlang der Förderebene der Kassetten (2) hintereinander positioniert sind, daß ferner alle Justierelemente (3) unter Angriff an der ihnen jeweils zugeordneten Kassette (2) durch eine Hubeinrichtung gleichzeitig und ausschließlich lotrecht anhebbar sind und jede angehobene Kassette (2) gegen das in Förderrichtung jeweils davor befindliche in angehobener Position stehende Justierelement (3) bewegt wird.

2. Vorrichtung zum Justieren von Brennkassetten auf einer horizontalen Tragfläche mittels in Anschlagkontakt mit den Kassetten versetzbaren, an ihren oberen Enden Rollen aufweisenden Justierelementen, welche auf die Teilung zwischen den Kassetten abgestimmte Abstände voneinander aufweisen und aus einer Lage unterhalb der Tragfläche über diese hinaus anhebbar sind, wobei die Justierelemente die Brennkassetten an deren in Förderrichtung hinteren unteren Seitenrändern beidseitig der Tragfläche angreifend anheben, dadurch gekennzeichnet, daß die Justierelemente (3) entlang der horizontalen Tragfläche (1) hintereinander positioniert sind, daß ferner alle Justierelemente (3) unter Angriff an der ihnen jeweils zugeordneten Kassette (2) durch eine Hubeinrichtung gleichzeitig und ausschließlich lotrecht anhebbar und in dieser Position gegen die jeweils zugeordnete, auf der Tragfläche ruhende Kassette horizontal verschiebbar sind.

3. Vorrichtung nach Anspruch 1 oder 2, dadurch gekennzeichnet, daß bei Lücken zwischen den Kassetten einer Kassettenreihe die Justierelemente (3) einen Abstand haben, der der Breite (B) der Kassette (2) plus Lückenbreite entspricht und eine die Lücken überbrückende Auflagebreite haben.

4. Vorrichtung nach einem der Ansprüche 1 bis 3, dadurch gekennzeichnet, daß alle Justierelemente (3) entlang des Förderers (1) durch eine Stange (5) miteinander verbunden sind.

**Claims**

1. Device for the adjustment of burning cassettes on a horizontal conveyor by means of adjusting elements which are in buffer contact with the cassettes and can be staggered, having pulleys at their upper end which have spaces being destinated for the separation of cassettes and can be lifted from a position below the horizontal conveyor, whereby the adjusting elements are lifting the burning cassettes over the conveyor surface by holding them at their side edges, characterized by the way that the adjusting elements (3) are situated one after the other along the conveyor surface of the cassettes (2) and by the way that further more all adjusting elements (3) can be lifted only vertically and at the same time by a lifting device by holding their assigned cassettes and each lifted cassette which is situated in front of it and against the conveyor direction.

2. Device for the adjustment of burning cassettes on a horizontal transporting surface by means of adjusting elements which are in buffer contact with the cassettes and can be staggered, having pulleys at their upper ends which have spaces destinated for the separation of the cassettes and can be lifted from a position below the transporting surface beyond the latter, whereby the adjusting elements are lifting the burning cassettes by holding them at their lower side edges at the back at both sides of the transporting surface in direction of the conveyor, characterized by the way that the adjusting elements (3) along the horizontal conveyor surface (1) are situated one after the other and by the way that all the adjusting elements (3) can only be lifted vertically and at the same time by holding the assigned cassette (2) by means of a lifting device and can in this position be displaced horizontally against the assigned cassette lying on the transporting surface.

3. Device as to claim 1 or 2 characterized by the way that in case of gaps between the cassettes of a row, the adjusting elements (3) have a distance which corresponds to the breadth (B) of the cassette (2) plus breadth of the gap and have a breadth of the bearing surfaces which spans the gaps.

4. Device as to one of the claims 1 to 3, characterized by the way that the adjusting elements (3) along the conveyor (1) are connected by a rod (5).

**Revendications**

1. Dispositif de positionnement de cassettes de cuisson sur un transporteur horizontal en moyen des éléments à ajuster qui sont en contact d'arrêt avec les cassettes et qui sont placés alternativement et ont des poulies sur leur haut bouts ; ils ont des distances destinées à la séparation des cassettes et peuvent être levés d'une position au-dessous du transporteur horizontal au-dessus de celui-ci, à l'occasion duquel les éléments à ajuster soulèvent les cassettes de cuisson en prenant les derrières marges au-dessus dans la direction du transporteur au-dessus du plan de transporteur, caractérisé de cette manière que les éléments à ajuster (3) de long du plan de transporteur des cassettes (2) sont situés l'un derrière l'autre et en outre que tous les éléments à ajuster (3) peuvent être enlevés en même temps et seulement verticalement par un dispositif à lever en prenant la cassette attribuée et que toutes les cassettes levées (2) sont mues contre l'élément à ajuster qui est situé avant et en position levée.

2. Dispositif de positionnement de cassettes de cuisson sur une surface portante en moyen des éléments à ajuster qui sont en contact d'arrêt avec les cassettes et qui sont placés alternativement et ont des pouliers sur leur haut bouts ; ils ont des distances destinées à la séparation des cassettes et peuvent être levés d'une position au-dessous de la surface portante au-dessus de celle-ci à l'occasion duquel les éléments à ajuster soulèvent les cassettes du cuisson en prenant les derrières marges au-dessous dans la direction du transporteur à tout les deux côtés de la surface portante, caractérisé de cette manière que les éléments à ajuster de long de la surface portante horizontale (1) sont situés l'un derrière l'autre et en outre que tous les éléments à ajuster (3) peuvent être enlevés en même temps et seulement verticalement par un dispositif à lever et en cette position peuvent être déplacés horizontalement contre la cassette attribuée qui est placée sur la surface portante.

3. Dispositif selon les spécifications du brevet 1 ou 2 caractérisé de cette manière que en cas des lacunes entre les cassettes d'une série de cassettes, les éléments à ajuster (3) ont une distance qui est correspondante à la largeur (B) de la cassette (2) plus largeur de la lacune et a une largeur de la surface d'appui qui la surmonte.

4. Dispositif selon les spécifications du brevet 1 à 3, caractérisé de cette manière que tous les éléments à ajuster (3) en long du transporteur (1) sont reliées par une barre (5).

Fig.1

Fig.2

Fig.3

Fig.4